**Europäisches Patentamt**

**European Patent Office**

**Office européen des brevets**

(19)

(11) Numéro de publication: **0 273 807 B1**

(12) # FASCICULE DE BREVET EUROPEEN

(45) Date de publication du fascicule du brevet:
**19.09.90**

(21) Numéro de dépôt: **87402721.2**

(22) Date de dépôt: **01.12.87**

(51) Int. Cl.⁵: **G01B 7/34,** B21B 37/00, G01B 7/28

(54) **Dispositif de mesure des défauts de planéité d'une bande.**

(30) Priorité: **04.12.86 FR 8616998**

(43) Date de publication de la demande:
**06.07.88 Bulletin 88/27**

(45) Mention de la délivrance du brevet:
**19.09.90 Bulletin 90/38**

(84) Etats contractants désignés:
**AT BE DE ES GB IT LU NL SE**

(56) Documents cités:
**EP-A- 0 028 191**
**EP-A- 0 028 971**
**FR-A- 1 401 304**
**FR-A- 2 257 893**
**US-A- 3 573 444**

(73) Titulaire: **CLECIM, 107 boulevard de la Mission Marchand, F-92400 Courbevoie(FR)**

(72) Inventeur: **Morel Michel, 4 Bis rue André Chénier, F-77500 Chelles(FR)**

(74) Mandataire: **Le Brusque, Maurice et al, Cabinet Harlé et Phélip 21, rue de la Rochefoucauld, F-75009 Paris(FR)**

ACTORUM AG

## Description

L'invention a pour objet un dispositif de mesure des défauts de planéité d'une bande défilant en continu et appliquée sous tension sur un rouleau de détection.

L'invention s'applique spécialement aux bandes métalliques produites dans des laminoirs à froid. On sait en effet, que lorsque la bande laminée sort du laminoir, elle peut présenter de légers défauts de planéité qu'il faut détecter après la sortie du laminoir pour les corriger si possible en agissant sur les conditions de laminage. La détection des défauts est également nécessaire pour contrôler la qualité du produit en fin d'opération.

Pour détecter les défauts de planéité, on utilise depuis longtemps un appareillage constitué d'un rouleau de détection placé en aval du laminoir et sur lequel on fait défiler la bande suivant une direction longitudinale, perpendiculaire à l'axe du rouleau.

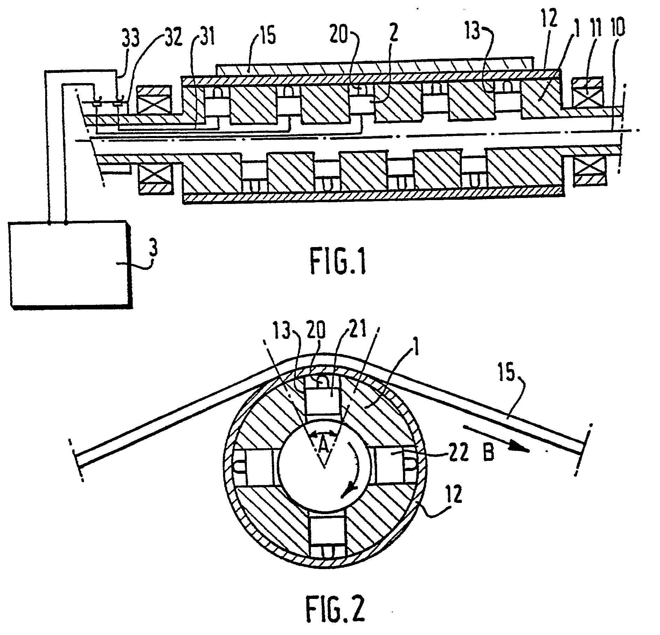

A titre d'exemple, on a représenté sur les Fig. 1 et 2 un rouleau de détection de type classique constitué d'un corps 1 monté rotatif autour de son axe 10 sur des paliers 11 et recouvert d'une enveloppe externe 12. A l'intérieur du corps 1, sont ménagés des orifices 13 dirigés suivant des directions radiales et dans lesquels sont placés des capteurs 2 comportant chacun un palpeur 21 qui s'appuie de l'intérieur sur la partie de l'enveloppe mince 12 recouvrant l'orifice 13 correspondant.

La bande laminée 20 passe sur le rouleau 1 et est appliquée sous tension de façon à recouvrir un secteur A du rouleau. De la sorte, comme on l'a représenté sur la Fig. 2, le défilement de la bande suivant la flèche B détermine la rotation du rouleau 1 autour de son axe, les capteurs 2 passant tous à intervalles périodiques au-dessous de la bande. Ainsi, à l'instant représenté sur la Fig. 2, l'un des capteurs 21 se trouve placé au-dessous de la bande et enregistre donc l'effort exercé par celle-ci sur le rouleau 1 alors que les autres capteurs 22, s'appuyant sur une partie de l'enveloppe 12 non recouverte par la bande, sont en position de repos.

Chaque capteur est relié par un câble 31 à un dispositif de mesure 3, normalement par l'intermédiaire d'un collecteur tournant 32 comportant différentes bagues conductrices sur lesquelles s'appuient des balais 33 établissant les connexions avec les circuits du dispositif de mesure 3.

On utilise souvent des capteurs de déplacements différentiels du type "LVDT" à transformateur. Un capteur de ce type comprend un noyau de ferrite associé à un enroulement primaire et à un enroulement secondaire. Le noyau de ferrite constitue un élément mobile suivant une direction axiale qui est solidaire du palpeur 21 du capteur 2 et peut donc se déplacer axialement sous l'action de celui-ci. L'élément primaire est branché sur un circuit d'alimentation en courant, et chaque fois qu'il est excité, détermine aux bornes de l'enroulement secondaire une tension qui est fonction de la position de l'élément mobile par rapport à la position de repos pour laquelle la tension est nulle.

Une installation de mesure de ce type est décrite en détail, par exemple, dans le brevet n° 79-26.618

(EP-A 28 191) de la même société. Dans la disposition décrite dans ce brevet, l'excitation de l'enroulement primaire de chaque capteur est commandée par des impulsions périodiques au moyen de dispositifs programmables, cette disposition permettant notamment de simplifier les connexions entre le dispositif de mesure 3 et les différents capteurs et de faire en sorte que l'enroulement primaire de chaque capteur soit excité au moment où le capteur correspondant passe dans la zone A d'application de la bande 20. En outre, le dispositif de mesure 3 comprend un convertisseur qui transforme chaque tension mesurée en un signal analogique ou digital représentatif de la position du palpeur 21 et par conséquent, de l'effort exercé par la bande à l'instant de l'impulsion.

D'autre part, selon une autre disposition également décrite dans le brevet n°79-26.618 déjà cité, il est avantageux de déterminer la mesure de la tension à un instant décalé dans le temps par rapport à l'instant de l'impulsion.

Cependant, pour effectuer des mesures précises, il faut amplifier la tension mesurée et en même temps, pour avoir une résolution fine, la mesure doit être effectuée dans un intervalle d'amplitude inférieure à l'amplitude de variation réelle de la tension, provoquée par le courant d'excitation. Il faut donc qu'au moment de la mesure la tension se trouve dans cet intervalle de mesure. Or, la tension du secondaire croît brutalement au moment de l'impulsion et sa courbe de variation présente donc, à cet instant, un front vertical puis décroît selon une courbe d'amortissement dont la forme dépend des caractéristiques du capteur et de la position du palpeur au moment de l'impulsion et qui, pour une course importante du palpeur, peut varier de part et d'autre du zéro en passant par un minimum. On préfère donc effectuer la mesure à un instant décalé dans le temps par rapport à l'instant de l'impulsion et pour lequel la courbe de variation de la tension présente une pente faible de façon à améliorer la précision de la mesure. Cependant, étant donné les amplitudes de variation de la tension, après l'impulsion de part et d'autre du zéro, il n'est toujours pas possible de définir un instant de la mesure tel qu'à ce moment la tension se trouve à coup sûr dans l'intervalle de mesure.

On a donc envisagé d'ajouter algébriquement à la tension à mesurer une tension de correction susceptible de ramener la tension mesurée dans l'intervalle de mesure mais, l'amplitude de variation dans le sens positif et dans le sens négatif de la tension dépendant du déplacement du palpeur au moment de l'impulsion, la tension de correction ne peut pas être fixe.

En outre, les tensions sont mesurées par rapport à une tension zéro qui devrait correspondre à la position de repos pour laquelle le palpeur est appliqué contre l'enveloppe interne, sans effort appliqué et il est très difficile de caler le capteur dans son logement avec assez de précision pour que la position de repos du palpeur corresponde exactement au zéro de la mesure de tension. D'autre part, même si l'on parvient à un calage très précis des capteurs, il peut se produire en cours de fonctionnement un lé-

ger enfoncement de la zone sensible déterminant un déplacement du zéro et nécessitant par conséquent, un nouveau calage du capteur.

L'invention a pour objet une nouvelle disposition permettant de résoudre facilement et à tout moment ces différents problèmes.

Conformément à l'invention, chaque capteur est associé à un tranformateur de correction susceptible de délivrer à chaque impulsion d'excitation une tension de correction réglable s'ajoutant algébriquement à la tension aux bornes de l'enroulement secondaire du capteur, et dont la valeur est déterminée de façon à ramener la tension mesurée, à l'instant de la mesure, dans l'intervalle de mesure du convertisseur qui transforme la tension en signal de mesure.

A cet effet, le transformateur de correction comprend un enroulement primaire branché en parallèle avec la primaire du capteur sur le circuit d'alimentation en courant d'excitation, un enroulement secondaire branché en opposition-série avec le secondaire du capteur sur le circuit de mesure de la tension et un noyau mobile de réglage de la tension de correction apparaissant aux bornes du secondaire du transformateur de correction.

Selon une autre caractéristique essentielle, l'enroulement secondaire du transformateur de correction présente une courbe de variation de tension en réponse à l'impulsion d'excitation de forme semblable à la courbe représentative des variations de la tension émise par l'enroulement secondaire du capteur.

D'autre part, le circuit de mesure comprend avantageusement une résistance de charge branchée en série avec le secondaire du capteur et en opposition-série avec le secondaire du transformateur de correction et aux bornes de laquelle est branché le convertisseur de transformation de la tension en signal de mesure.

Grâce à ces dispositions, chaque capteur étant calé dans le rouleau de telle sorte que, en l'absence d'effort appliqué, l'élément mobile du capteur se trouve sensiblement en position de repos, il est possible de régler avec précision le noyau du transformateur de correction de telle sorte que la tension mesurée aux bornes de la résistance de charge soit rigoureusement nulle.

Mais l'invention sera mieux comprise par la description plus détaillée d'un mode de réalisation particulier donné à titre d'exemple et représenté sur les dessins annexés.

- la Fig. 1 représente un rouleau de détection de type connu;
- la Fig. 2 est une vue en coupe transversale de la Fig. 1, à l'échelle agrandie;
- la Fig. 3 représente schématiquement l'ensemble du dispositif de mesure selon l'invention;
- la Fig. 4 donne plusieurs diagrammes successifs de variation des tensions aux bornes des différents organes.

Comme on l'a indiqué, la Fig. 1 et la Fig. 2 représentent un rouleau de détection de type classique comprenant une pluralité de capteurs 2 placés dans des logements 13 et comprenant chacun un palpeur 20 appliqué contre la face interne de l'enveloppe mince 12 recouvrant le rouleau. Chaque capteur est relié par une ligne 31 à un dispositif de mesure 3 par l'intermédiaire d'un collecteur tournant 32 et des balais 33.

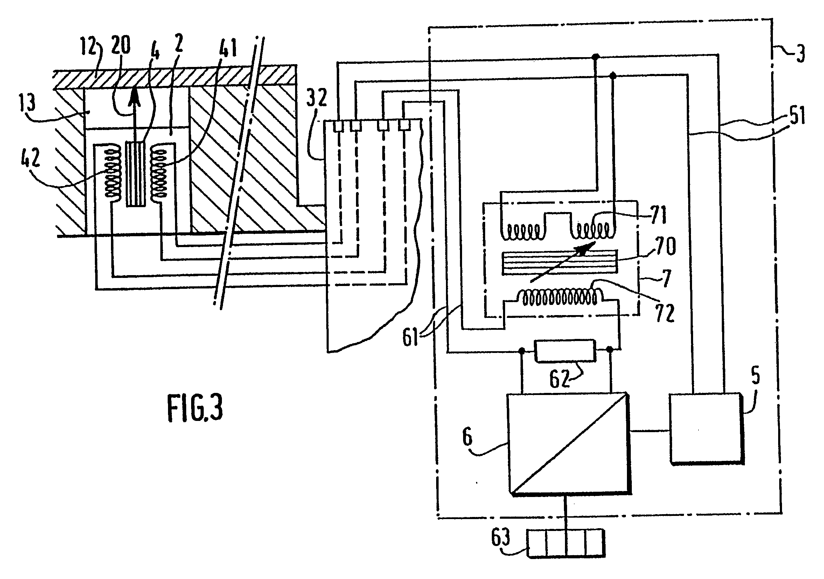

Sur la Fig. 3, on a représenté plus en détail et schématiquement, un capteur de déplacement différentiel 2 comprenant un noyau de ferrite 4 solidaire du palpeur 20 de façon à pouvoir se déplacer axialement sous l'action des efforts appliqués sur l'enveloppe mince 12 au droit du capteur 2. Le noyau de ferrite est associé à un enroulement primaire 41 et à un enroulement secondaire 42 relié par le collecteur tournant 32 au dispositif de mesure 3 constituant un coffret électronique symbolisé sur la figure par un trait mixte et dans lequel on n'a représenté que la partie correspondante à l'un des capteurs 2.

De façon classique, le dispositif de mesure comprend notamment un organe d'alimentation électrique 5 relié à l'enroulement primaire 41 par un circuit d'alimentation 51 sur lequel le courant d'excitation est envoyé par impulsions périodiques, à intervalles déterminés, grâce à une horloge incorporée à l'organe d'alimentation 5.

L'enroulement secondaire 42 du capteur 2 est relié, par l'intermédiaire du collecteur 32, à un circuit fermé 61 sur lequel est branché en série une résistance de charge 62. Le dispositif de mesure 3 comprend un convertisseur 6 qui, après amplification, mesure la tension aux bornes de la résistance de charge 62 et la transforme en un signal de mesure digital ou analogique qui peut être indiqué sur un organe d'affichage 63 ou exploité de toute autre manière.

L'organe d'alimentation 5 et le convertisseur 6 peuvent être communs à l'ensemble des capteurs. En revanche, le dispositif de mesure 3 comprend, pour chaque capteur 2, un second transformateur différentiel 7 qui lui est associé et qui est destiné à élaborer une tension de correction.

A cet effet, chaque transformateur de correction 7 comprend un noyau de ferrite 70 de position réglable associé à un enroulement primaire 71 et à un enroulement secondaire 72.

L'enroulement primaire 71 du transformateur de correction 7 est branché en parallèle avec l'enroulement primaire 41 du capteur sur le circuit 51 d'alimentation en courant d'excitation. En revanche, l'enroulement secondaire 72 du transformateur de correction est branché en opposition-série avec l'enroulement secondaire 42 du capteur sur le circuit fermé de mesure 61.

De la sorte, chaque impulsion de courant d'excitation émise sur le circuit d'alimentation 51 détermine l'apparition d'une tension, non seulement aux bornes de l'enroulement secondaire 42 du capteur mais également aux bornes de l'enroulement secondaire 72 du transformateur de correction. Ce dernier est choisi du même type que le transformateur du capteur de telle sorte que les tensions U1 et U2 apparaissant respectivement aux bornes des enroulements secondaires 42 du capteur et 72 du transformateur de correction 7, varient de façon semblable.

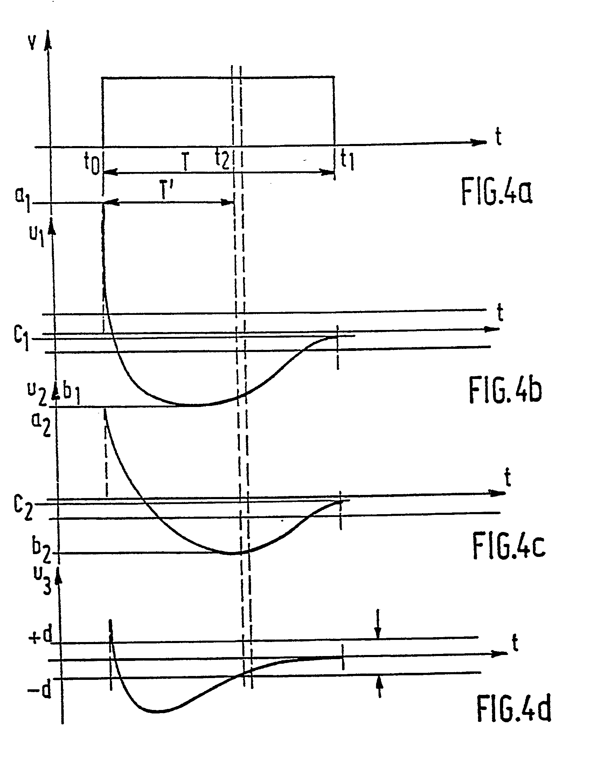

A titre d'exemple, sur la Fig. 4, on a représenté quatre diagrammes successifs indiquant les variations de tension en fonction du temps.

La Fig. 4a représente la tension d'excitation appliquée à l'instant to et pendant un temps T sur les enroulements primaires 41 du capteur 2 et 71 du transformateur de correction 7.

La Fig. 4b représente la variation de la tension U1 aux bornes de l'enroulement secondaire 42 du capteur 2. On voit que, à l'instant to de l'impulsion, la tension U1 présente un front vertical suivi d'une courbe d'amortissement qui, très grossièrement, a une forme parabolique, la tension partant d'une valeur maximale a1 puis descendant jusqu'à un minimal négatif b1 pour remonter, à l'instant t1 de fin de l'excitation, jusqu'à une valeur positive c1.

La Fig. 4c représente les variations de la tension U2 aux bornes de l'enroulement secondaire du transformateur de correction 7. Comme on l'a indiqué, ce transformateur étant du même type que celui du capteur, la courbe de réponse de la tension U2 a une forme semblable à celle de la tension U1 du capteur. A l'instant to de l'impulsion, elle part donc d'une valeur maximale a2, descend jusqu'à une valeur minimale b2 pour remonter à une valeur c2 à la fin du temps d'excitation.

La Fig. 4d représente les variations de la différence U1 - U2 = U3.

Selon une disposition décrite dans le brevet 79-26.618 déjà cité, la mesure est effectuée à un instant t2 décalé d'un temps T' par rapport à l'instant to de l'impulsion. On peut donc agir sur la position du noyau de ferrite 70 du transformateur de correction 7 pour régler l'amplitude de variation de la tension U2 de telle sorte que la tension résultante U3 mesurée aux bornes de la résistance de charge 62 se trouve dans l'intervalle de mesure (+d,-d) du convertisseur 6 et que la courbe de variations de la tension U3 présente à l'instant de la mesure t2 une pente très faible, comme on le voit sur la Fig. 4d.

On voit donc que l'on dispose d'un moyen souple de réglage de la tension de correction qui doit être soustraite de la tension de mesure U1 pour ramener celle-ci dans la fenêtre (+d,-d) du convertisseur.

A cet effet, lors du montage des capteurs sur le rouleau à vide, il suffit de caler approximativement chaque capteur 2 à l'intérieur de son logement 13 de façon à régler la position du noyau de ferrite 4 par appui du palpeur 20 sur l'enveloppe 12 pour que la tension mesurée soit sensiblement nulle. On peut procéder ensuite au réglage fin du zéro de chaque capteur sur le rouleau en service en agitant sur le noyau 70 de chaque transformateur de correction correspondant pour que, à l'instant t2 de la mesure décalé, comme on l'a vu, par rapport à l'instant de l'impulsion, et en l'absence d'effort appliqué, la tension U3 soit rigoureusement nulle.

L'intervalle de résolution de convertisseur est prévu en fonction des variations de tension résultant des variations de l'effort appliqué de telle sorte que, en service, la tension U3 mesurée reste toujours à l'intérieur de l'intervalle (+d, -d).

Il est donc possible de placer le capteur à l'intérieur du rouleau de détection 1, sans être obligé de procéder à un réglage fin ce dernier pouvant être réalisé ensuite électroniquement.

Mais en outre, si, par suite d'un déplacement du capteur ou d'un enfoncement de l'enveloppe, la position de repos change, il est possible d'intervenir à distance uniquement sur le réglage du transformateur 7 correspondant de façon à ramener à zéro la tension mesurée à la position de repos.

Il est possible également, en cas de détérioration d'un capteur, de remplacer celui-ci et de régler de nouveau le zéro électronique.

On notera également que le réglage du zéro de chacun des capteurs peut se faire en cours de fonctionnement quelle que soit la température de rouleau alors que, auparavant, le calage mécanique des capteurs étant effectué à froid, il fallait tenir compte à l'avance de l'influence de la température de fonctionnement sur la position de repos du capteur.

Bien entendu, l'invention ne se limite pas aux détails du mode de réalisation qui n'a été décrit qu'à titre d'exemple, d'autres dispositions équivalentes pouvant être imaginées sans s'écarter du cadre de protection défini par les revendications.

En particulier, on a représenté schématiquement un certain type de capteur différentiel mais l'invention est applicable à tout type de capteur à transformateur.

De même, le réglage de la tension du secondaire du transformateur de correction doit être effectué par exemple au moyen d'un potentiomètre.

Enfin, d'autres schémas pourraient être imaginés pour adapter le transformateur de correction faisant l'objet de l'invention à un autre type de dispositif de mesure des tensions.

**Revendications**

1. Dispositif de mesure des défauts de planéité d'une bande (15) défilant en continu suivant une direction longitudinale et appliquée sous tension sur un rouleau (1) monté rotatif autour d'un axe transversal (10) et le long duquel sont montés une pluralité de capteurs à transformateur (2) comprenant chacun un élément (20) mobile radialement entre une position de repos et une position de mesure dépendant de l'effort exercé par la bande (15), un enroulement primaire d'excitation (41) branché sur un circuit (51) d'alimentation en courant par impulsions périodiques et un enroulement secondaire (42) branché sur un circuit (61) de mesure de la tension apparaissant aux bornes de l'enroulement secondaire (42) à chaque impulsion d'excitation de l'enroulement primaire, cette dernière, mesurée à un instant déterminé (t2) après l'impulsion, étant fonction de la position de l'élément mobile (20) par rapport à la position de repos à l'instant (to) de l'impulsion, ladite tension mesurée étant transformée par un convertisseur (6) en un signal représentatif de l'effort appliqué sur le rouleau (1) à l'instant de l'impulsion, caractérisé par le fait que, la mesure de la tension étant effectuée dans un intervalle de mesure d'amplitude inférieure à l'intervalle de variation de la tension après l'impulsion, chaque capteur (2) est associé à un transformateur de correction (7) susceptible de délivrer à chaque impulsion d'excitation, une tension de correction (U2) réglable s'ajoutant algébriquement à la tension (U1) aux bornes de l'enroulement secondaire (42) du capteur (2) et dont la valeur à l'instant de la mesure, est déterminée de façon à ramener la tension mesurée (U3) dans l'intervalle de mesure du convertisseur.

2. Dispositif de mesure selon la revendication, caractérisée en ce que le transformateur de correction (7) comprend un enroulement primaire (71) branché en parallèle avec le primaire (41) du capteur (2) sur le circuit (51) d'alimentation en courant d'excitation, un enroulement secondaire (72) branché en opposition-série avec le secondaire (42) du capteur (2) sur le circuit (61) de mesure de la tension et un noyau mobile (70) de réglage de la tension de correction (U2) apparaissant aux bornes du secondaire (72) du transformateur de correction (7).

3. Dispositif de mesure selon la revendication 2, caractérisé en ce que l'enroulement secondaire (72) du transformateur de correction (7) présente une courbe de variation de tension en réponse à l'impulsion d'excitation de forme semblable à celle de l'enroulement secondaire (42) du capteur (2).

4. Dispositif de mesure selon la revendication 1, caractérisé en ce que le circuit de mesure (61) comprend une résistance de charge (62) branchée en série avec le secondaire (42) du transformateur de correction et aux bornes de laquelle est branché le convertisseur (6) de transformation de la tension en signal de mesure.

5. Dispositif de mesure selon les revendications 3 et 4, caractérisé en ce que chaque capteur (2) est calé dans le rouleau (1) de telle sorte que, en l'absence d'effort appliqué, l'élément mobile (20) du capteur se trouve dans une position pour laquelle la tension mesurée est faible, puis le noyau (70) du transformateur de correction (7) est réglé en service de telle sorte que la tension mesurée aux bornes de la résistance de charge soit rigoureusement nulle à l'instant (t2) de la mesure et lorsque le capteur correspondant se trouve hors de la zone de contact de la bande.

**Patentansprüche**

1. Vorrichtung zum Messen der Planfehler eines kontinuierlich gemäss einer Längsrichtung durchlaufenden Bandes (15), das unter Spannung an eine um eine Querachse (10) drehbar montierte Rolle (1) angedrückt wird, entlang derer mehrere Messwertaufnehmer (2) angeordnet sind, bestehend aus je einem zwischen einer Ruhe- und einer Messslage in Abhängigkeit von der auf das Band (15) ausgeübten Kraft radial beweglichen Glied (20), einer an einen Impulsstromkreis (51) angeschlossene Primär-Erregerwicklung und einer an einen Messkreis (61) angeschlossenen Sekundärwicklung (42) zur Messung der bei jedem Erregerimpuls der Primärwicklung an den Klemmen der Sekundärwicklung (42) angelegten Spannung, wobei diese an einem nach dem Impuls bestimmten Zeitpunkt (t2) gemessene Spannung von der Lage des beweglichen Gliedes (20) gegenüber der Ruhelage zum Zeitpunkt (to) des Impulses abhängig ist, und wobei die gemessene Spannung in ein die zum Impulszeitpunkt auf die Rolle (1) ausgeübte Kraft darstellendes Signal durch einen Wandler (6) umgeformt wird, dadurch gekennzeichnet, dass, wobei die Spannungsmessung in einer Messfolge bei einer unter der Spannungsschwankungsfolge nach dem Impuls liegenden Amplitude erfolgt, jedem Messwertgeber (2) ein Korrekturtrafo (7) zugeordnet ist, der bei jedem Erregerimpuls eine regelbare Korrekturspannung (U2) abgeben kann, die zu der Spannung (U1) an den Klemmen der Sekundärwicklung (42) des Messwertgebers (2) algebrisch addiert wird, dessen Wert zum Messzeitpunkt so bestimmt ist, dass die Messspannung (U3) in das Messfenster des Wandlers zurückgelegt wird.

2. Messvorrichtung nach Anspruch 1, dadurch gekennzeichnet, dass der Korrekturtrafo (7) eine Primärwicklung (71) umfasst, die mit der Primärseite (41) des Messwertgebers (2) an dem Erregerstromkreis (51) parallelgeschaltet ist, sowie eine Sekundärwicklung (72), die mit der Sekundärseite (42) des Messwertgebers (2) an dem Spannungsmesskreis (61) gegeneinander in Reihe geschaltet ist und ein beweglicher Anker (70) zum Regeln der an den Klemmen der Sekundärseite (72) des Korrekturtrafos (7) angelegten Korrekturspannung (U2).

3. Messvorrichtung nach Anspruch 2, dadurch gekennzeichnet, dass die Sekundärwicklung (72) des Korrekturtrafos (7) einen als Reaktion auf den Erregerimpuls schwankende Spannugsverlauf aufweist, dessen Form derjenigen der Sekundärwicklung (42) des Messwertgebers (2) entspricht.

4. Messvorrichtung nach Anspruch 1, dadurch gekennzeichnet, dass der Messkreis (61) einen mit der Sekundärseite (42) des Korrekturtrafos in Reihe geschalteten Lastwiderstand (62) aufweist, an dessen Klemmen der Wandler (6) zum Umformen der Spannung in ein Messsignal angeschlossen ist.

5. Messvorrichtung nach Anspruch 3 und 4, dadurch gekennzeichnet, dass jeder Messwertgeber (2) in der Rolle (1) so verkeilt ist, dass, ohne Andruckkraft, das bewegliche Glied (20) des Messwertgebers in einer einer niedrigen Messspannung entsprechenden Lage ist, dann der Anker (70) des Korrekturtrafos (7) an der in Betrieb befindlichen Rolle so eingestellt wird, dass die an den Klemmen des Lastwiderstandes gemessene Spannung zum Messzeitpunkt (t2) und wenn der entsprechende Messwertgeber ausserhalb der Bandkontaktfläche liegt, absolut Null ist.

**Claims**

1. Device for measuring flatness faults in a belt (15) continuously running in a longitudinal direction and applied under tension against a roller (1) mounted such that it rotates about a transverse axis (10) and along which there are mounted a plurality of transformer sensors (2) each comprising an element (20) moving radially between a rest position and a measuring position depending on the force exerted by the strip (15), a primary energizing winding (41) connected to a circuit (51) supplying current in periodic pulses and a secondary winding (42) connected to a circuit (61) for measuring the voltage appearing at the terminals of the secondary winding (42) at each energizing pulse of the primary winding, this voltage, measured at a determined instant (t2) after the pulse, being dependent on the position of the moving element (20) with respect to the rest position at the instant (t0) of the pulse, the said measured voltage being transformed by a converter (6) into a signal representing the force applied on the roller (1) at the instant of the pulse, characterized by the fact that, with the measurement of the voltage being carried out inside an amplitude measuring internal smaller than the voltage variation interval after the pulse, each sensor (2) is associated with a correction transformer (7) capable of delivering on each energizing pulse an adjustable correction voltage (U2) algebraically added to the voltage (U1) at the terminals of the secondary winding (42) of the sensor (2) and whose value, at the instant of measurement, is determined so as to bring the measured voltage (U3) inside the measuring internal of the converter.

2. Measuring device according to Claim 1, characterized in that the correction transformer (7) comprises a primary winding (71) connected in parallel with the primary (41) of the sensor (2) to the energizing current supply circuit (51), a secondary winding (72) connected in series-opposition with the secondary (42) of the sensor (2) to the voltage measuring circuit (61) and a moving core (70) for adjusting the correction voltage (U2) appearing at the terminals of the secondary (72) of the correction transformer (7).

3. Measuring device according to Claim 2, characterized in that the secondary winding (72) of the correction transformer (7) exhibits a voltage variation curve in response to the energizing pulse whose shape is similar to that of the secondary winding (42) of the sensor (2).

4. Measuring device according to Claim 1, characterized in that the measuring circuit (61) comprises a load resistor (62) connected in series with the secondary (42) of the correction transformer and to the terminals of which there is connected the converter (6) transforming the voltage into a measurement signal.

5. Measuring device according to Claims 3 and 4, characterized in that each sensor (2) is fixed in the roller (1) in such a way that, in the absence of applied force, the moving element (20) of the sensor is in a position for which the measured voltage is low, and then the core (70) of the correction transformer (7) is adjusted on the operating roller such that the voltage measured at the terminals of the load resistor is strictly zero at the instant (t2) of measurement and when the corresponding sensor is out of the area of contact with the strip.

EP 0 273 807 B1

FIG.1

FIG.2

FIG.3

FIG.4a

FIG.4b

FIG.4c

FIG.4d